Europäisches Patentamt

(19) European Patent Office

Office européen des brevets

(11) Numéro de publication : **0 158 935**
**B1**

# (12) FASCICULE DE BREVET EUROPÉEN

(45) Date de publication du fascicule du brevet :
09.11.88

(21) Numéro de dépôt : 85104113.7

(22) Date de dépôt : 09.04.85

(51) Int. Cl.⁴ : **H 02 K 21/00, H 02 K 19/18**

(54) **Machine electrodynamique vernier.**

(30) Priorité : 13.04.84 FR 8405888

(43) Date de publication de la demande :
23.10.85 Bulletin 85/43

(45) Mention de la délivrance du brevet :
09.11.88 Bulletin 88/45

(84) Etats contractants désignés :
BE CH DE FR GB IT LI NL SE

(56) Documents cités :
FR-A- 1 556 113
US-A- 1 491 441
US-A- 4 306 164
PATENTS ABSTRACTS OF JAPAN, vol. 6, no. 182 (E-131) [1060], 18 septembre 1982; & JP - A - 57 95 174 (TOKYO SHIBAURA DENKI K.K.) 12-06-1982
PATENTS ABSTRACTS OF JAPAN, vol. 6, no. 222 (E-140)[1100], 6 novembre 1982; & JP - A - 57 126 264 (KIJIYUU IIZUKA) 05-08-1982

(73) Titulaire : **ALSTHOM**
**38, avenue Kléber**
**F-75784 Paris Cédex 16 (FR)**

(72) Inventeur : **Pouillange, Jean**
**7 allée des Sylphides Gressy**
**F-77410 Claye Souilly (FR)**

(74) Mandataire : **Weinmiller, Jürgen et al**
**Lennéstrasse 9 Postfach 24**
**D-8133 Feldafing (DE)**

## Description

La présente invention concerne une machine électrodynamique vernier.

On connaît une machine électrodynamique vernier, du type comportant :

— deux pièces séparées l'une de l'autre par un entrefer disposé suivant une surface, ces pièces pouvant se déplacer l'une par rapport à l'autre suivant une direction de cette surface de manière que l'épaisseur de l'entrefer reste constante

• une première de ces pièces étant constituée par une armature magnétique comportant N dents formant N encoches, les encoches débouchant dans l'entrefer et étant uniformément réparties le long de ladite direction,

• la seconde pièce comportant

+ M éléments disposés le long de ladite direction, M étant un nombre entier différent de N, ces éléments étant aptes à créer dans l'entrefer, par suite de l'écart entre M et N, des décalages par rapport aux dents de l'armature, les décalages successifs variant le long de ladite direction selon une loi moyenne linéaire,

+ et des moyens pour créer dans l'entrefer un champ magnétique multipolaire,

— et des moyens coopérant magnétiquement avec l'armature pour créer dans ledit entrefer un champ magnétique de même polarité que le précédent, glissant par rapport à l'armature le long de ladite direction, lesdits décalages entraînant une différence entre la vitesse de glissement du champ glissant et la vitesse d'une pièce par rapport à l'autre lorsque les champs précités se déplacent de manière synchrone.

Plusieurs formes particulières de machines électrodynamiques vernier connues sont décrites ci-dessous, à titre d'exemple, en référence aux dessins annexés dans lesquels

— la figure 1 représente schématiquement, en coupe partielle longitudinale, un moteur vernier de type connu,

— la figure 2 est une vue montrant partiellement, en coupe transversale le profil dentaire du stator et du rotor du moteur illustré par la figure 1,

— la figure 3 représente partiellement, en coupe transversale, un autre moteur vernier de type connu,

— la figure 4 est un graphique illustrant le fonctionnement du moteur représenté sur la figure 3,

— la figure 5 est une vue partielle en coupe transversale d'un réducteur vernier de type connu,

— la figure 6 est une vue partielle en coupe transversale d'un autre réducteur vernier de type connu

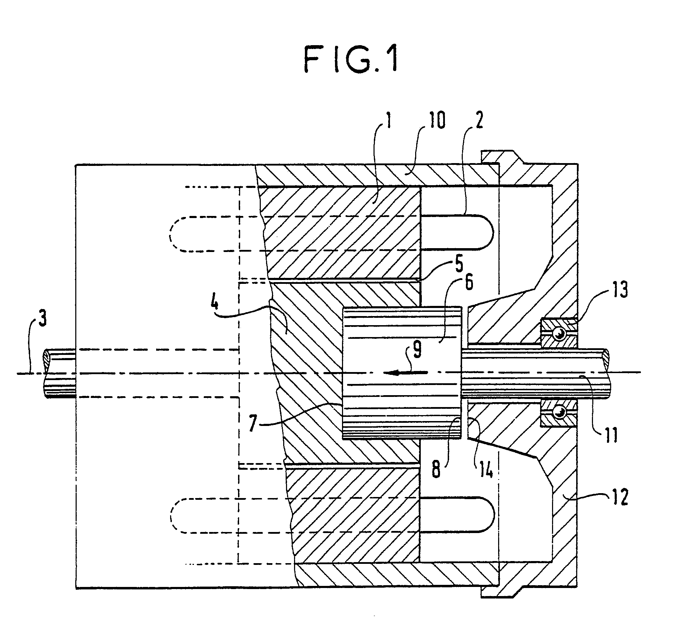

Le moteur vernier représenté sur la figure 1 comporte un stator 1 muni d'un bobinage 2. Le stator 1 est formé d'un assemblage de tôles magnétiques dentées et le bobinage 2, du type polyphasé à 2 p pôles, est logé dans les encoches situées entre les dents du stator. Le stator 1 est cylindrique de révolution autour d'un axe 3 et de section annulaire. Un rotor denté 4, formé aussi d'un assemblage de tôles magnétiques et monté en rotation autour de l'axe 3, est disposé dans le volume cylindrique intérieur du stator 1 et séparé de celui-ci par un entrefer cylindrique 5. Un aimant cylindrique 6 est fixé coaxialement dans le rotor 4. La fixation de l'aimant 6 dans le rotor 4 est réalisée de façon qu'une face plane 7 de l'aimant soit située dans le volume du rotor 4 alors que son autre face plane 8 est située en dehors de ce volume. L'aimant 6 est aimanté dans le sens 9 allant de la face 8 à la face 7, de manière à créer dans le rotor 4 un flux magnétique traversant l'entrefer 5 pour pénétrer dans le stator 1. Celui-ci est fixé à l'intérieur d'une carcasse magnétique cylindrique 10. Le rotor 4 et l'aimant 6 sont fixés sur un arbre 11 capable de tourner autour de l'axe 3 dans deux paliers s'appuyant sur la carcasse 10. Le flasque 12 représenté en coupe sur la figure 1 comporte un roulement 13 monté sur l'arbre 11. Le flasque 12 est réalisé en acier magnétique et comporte une surface 14 disposée à proximité et en regard de la face 8 de l'aimant 6 de façon à refermer le circuit du flux magnétique créé par l'aimant 6.

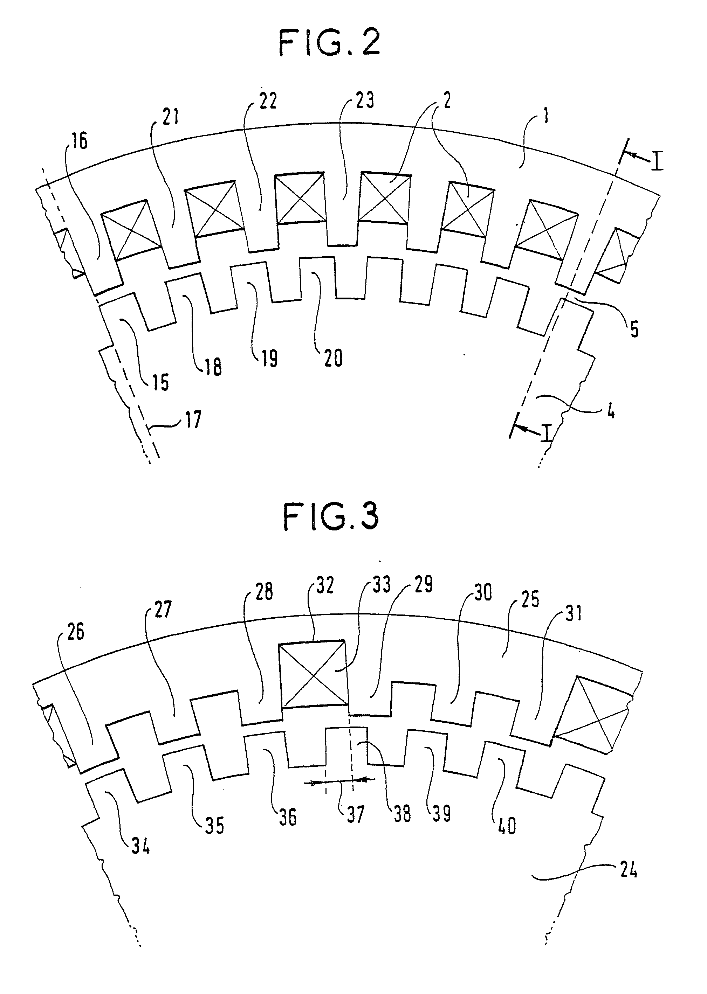

En référence à la figure 2, les dents du stator 1 sont uniformément réparties autour de l'axe de la machine. Le stator comporte n pas dentaires égaux entre eux, par paire de pôles définis par le bobinage 2. Comme il est visible sur la figure 2, les dents du rotor sont uniformément réparties autour de l'axe, mais le nombre de ces dents est plus élevé ; le rotor 4 comprend par exemple n + 1 dents par paire de pôles. La position du rotor par rapport au stator sur la figure est telle qu'un côté d'une dent 15 du rotor est aligné avec un côté d'une dent 16 du stator suivant une direction radiale 17. On voit alors que les dents suivantes 18, 19, 20 du rotor sont décalées par rapport aux dents homologues 21, 22, 23 du stator. Ces décalages ont un effet magnétique dans l'entrefer 5 traversé par le flux magnétique créé par l'aimant 6.

Lorsqu'on alimente le bobinage 2 par un courant électrique polyphasé, ce bobinage crée un champ tournant autour de l'axe 3. Le moteur représenté sur les figures 1 et 2 est du type synchrone homopolaire et le flux magnétique créé par l'aimant 6 doit tourner à une vitesse égale à la vitesse de rotation du champ tournant. Par suite des décalages mentionnés ci-dessus, le rotor tourne à une vitesse plus faible qui est égale au quotient de la vitesse du champ tournant par un coefficient K.

Dans le cas où le stator comporte n dents par paire de pôles et le rotor n + 1 dents par paire de pôles stator, le coefficient K est égal à n + 1. Cette réduction de vitesse s'accompagne, par rapport à une machine synchrone classique dont l'induit est traversé par le même champ continu, d'une augmentation du couple, celui-ci étant multiplié par le facteur K.

Cependant il est possible de réaliser des machines vernier connues dans lesquels les paliers de décalage successifs correspondent chacun à plusieurs pas dentaires. Par exemple, dans le moteur illustré par la figure 3, le rotor 24 comporte des pas dentaires régulièrement répartis, tandis que le stator 25 comporte des groupes de pas dentaires séparés entre eux par des intervalles. Chaque groupe comporte plusieurs pas dentaires égaux entre eux et au pas dentaire rotor. La figure 3 montre un premier groupe stator comportant les dents 26, 27 et 28 et un deuxième groupe stator comportant les dents 29, 30 et 31. Ces deux groupes sont séparés entre eux par un intervalle 32 dans lequel peut être logé un faisceau du bobinage 33 du stator.

Dans la position représentée sur la figure, les dents 26, 27 et 28 sont juste en face des dents 34, 35 et 36 du rotor. L'intervalle 32 est déterminé pour obtenir un décalage tel que 37 entre les dents 29, 30 et 31 du stator et les dents 38, 39 et 40 du rotor.

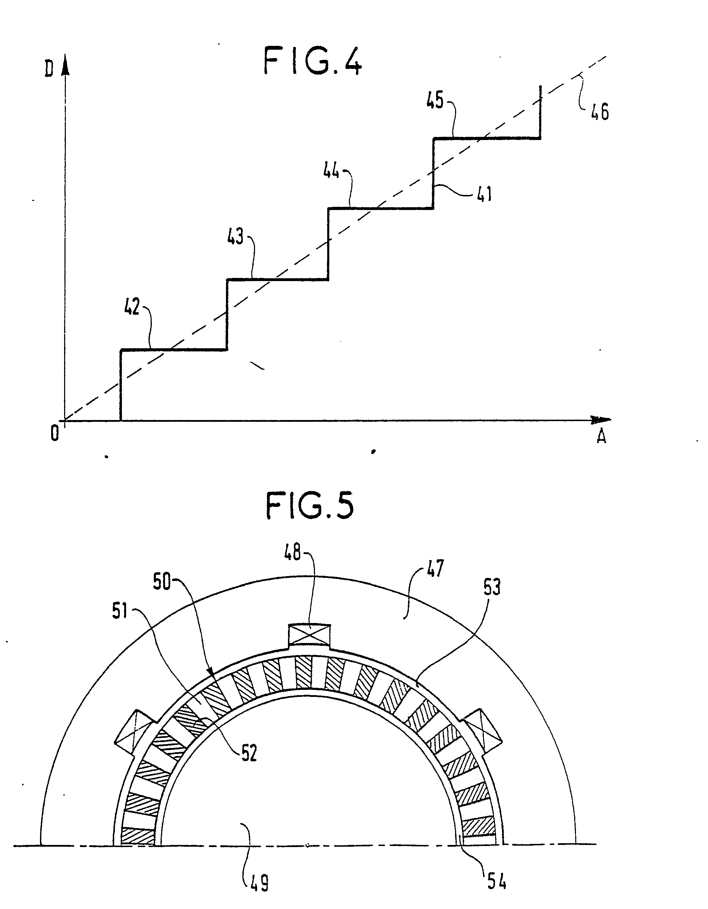

La figure 4 représente la loi de variation 41 des décalages le long de l'entrefer dans une machine du type de celle illustrée sur la figure 3. La position le long de l'entrefer est repérée en abscisse par un angle A par rapport à un plan axial de référence, les décalages D étant portés en ordonnée. On voit que la courbe 41 comporte des paliers successifs 42, 43, 44 et 45. On peut définir à partir de cette loi de variation par paliers une loi moyenne linéaire 46.

En pratique les deux modes de réalisation de moteurs vernier représentés sur les figures 2 et 3 ont un fonctionnement tout à fait comparable.

Le principe de fonctionnement des machines électrodynamiques de type vernier s'applique aussi aux génératrices vernier. Dans ce cas, par exemple, on fait tourner le rotor des machines représentées sur les figures 2 et 3 et on recueille le courant électrique produit dans les bobinages stator de ces machines.

Ce principe s'applique aussi aux machines vernier de type linéaire dans lesquelles l'entrefer n'est pas disposé suivant une surface cylindrique, mais suivant une surface plane séparant les deux pièces en mouvement relatif ; la pièce mobile se déplace alors par rapport à la pièce fixe suivant une ligne droite parallèle à la surface de l'entrefer.

Il est possible de réaliser aussi des machines électrodynamiques de type vernier fonctionnant en réducteur rotatif.

Le réducteur de type connu représenté sur la figure 5 comporte un premier rotor 47 de forme annulaire. Ce rotor n'est pas denté mais porte un bobinage continu 48 à 2 p pôles. Le réducteur comporte en outre un deuxième rotor 49 cylindrique coaxial. Ce rotor comporte des dents non représentées, analogues à celles du rotor du moteur de la figure 2. Entre les rotors 47 et 49 est disposé un stator 50 coaxial de forme annulaire et comprenant n dents radiales 51 par paire de pôles, ces dents étant séparées l'une de l'autre par des entretoises 52 en matériau amagnétique. Bien entendu le stator 51 est séparé des rotors 47 et 49 par des entrefers cylindriques 53 et 54.

Lorsqu'on entraîne en rotation le rotor 47 à une vitesse v et qu'on alimente le bobinage 48 par un courant électrique continu, on crée un champ tournant qui traverse radialement le stator 50 et pénètre dans le deuxième rotor 49. Il apparaît donc que l'ensemble 47-53-50 est équivalent au stator des moteurs représentés sur les figures 2 et 3. Dans ces conditions, si le rotor 49 comporte n + 1 dents par paire de pôles du bobinage 48, le rotor 49 tourne à une vitesse v/n + 1.

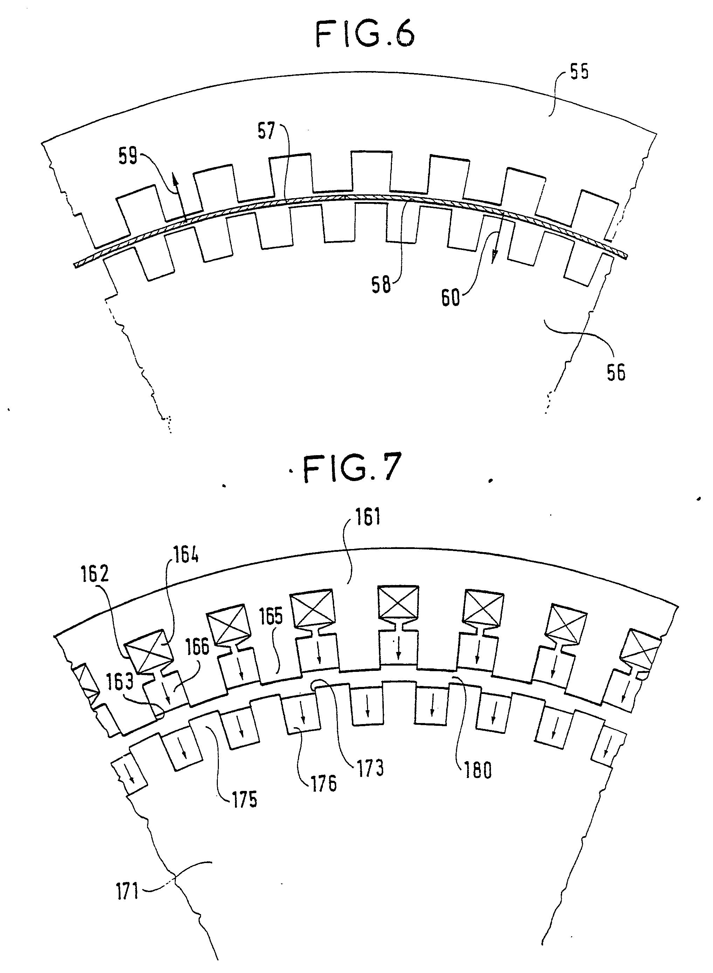

La figure 6 représente un autre réducteur vernier de type connu comportant un stator 55 et un rotor 56 coaxiaux et dentés. Le champ tournant est ici produit par un autre rotor coaxial 57 disposé dans l'entrefer situé entre le stator 55 et le rotor 56. Le rotor 57 comporte 2 p aimants tels que 58 juxtaposés le long de l'entrefer et dont les directions d'aimantation radiales 59 et 60 sont alternées de façon à créer un champ tournant à 2 p pôles. Si le stator 55 possède n encoches par paires de pôles et si le rotor 56 possède n + 1 encoches par paires de pôles, l'entraînement en rotation du rotor 57 à une vitesse v provoque une rotation du rotor 56 à une vitesse v/n + 1 de l'art antérieur.

Par conséquent d'une manière générale les machines électrodynamiques vernier connues sont des machines de type synchrone homopolaire dont les deux pièces en mouvement relatif comportent respectivement deux rangées de dents en regard l'une de l'autre, le nombre des dents d'une rangée étant différent du nombre de dents de l'autre rangée.

Ces machines présentent des inconvénients. En effet elles doivent avoir un entrefer de faible épaisseur pour accentuer l'effet magnétique entraîné par le décalage des dents. Cette réduction d'entrefer entraîne par suite de la saturation du circuit magnétique une diminution des ampères-tours et par conséquent du couple de la machine. Par ailleurs, le flux magnétique de ces machines présente une composante homopolaire qui ne produit pas de couple tout en contribuant à la saturation du circuit magnétique. Il en résulte un encombrement qui peut être prohibitif dans certaines applications.

Des machines homopolaires sont décrites par exemple dans les documents US-A-4 306 164, JP-A-5 795 174 et JP-A-57 126 264.

La présente invention a pour but de pallier ces inconvénients.

Elle a pour objet une machine électrodynamique vernier, du type comportant :

— deux pièces séparées l'une de l'autre par un entrefer disposé suivant une surface, ces pièces pouvant se déplacer l'une par rapport à l'autre suivant une direction de cette surface de manière que l'épaisseur de l'entrefer reste constante

• une première de ces pièces étant constituée par une armature magnétique comportant N dents formant N encoches, les encoches débouchant dans l'entrefer et étant uniformément réparties le long de ladite direction,

• la seconde pièce comprenant, disposés le long de ladite direction, soit M dents formant M encoches avec un pas différent du pas des dents de la première pièce, soit P groupes de Q dents au même pas que celui des dents de la première pièce, les groupes étant décalés pour obtenir l'effet vernier,

● et des moyens pour créer dans l'entrefer un champ magnétique glissant par rapport à la première pièce le long de ladite direction, caractérisée en ce que chacune des dents de la première et de la seconde pièce comporte des générateurs d'induction magnétique créant des flux d'induction normaux à l'entrefer et orientés dans le même sens.

Divers modes de réalisation de l'invention sont décrits ci-après en référence au dessin dans lequel :

La figure 7 est une vue partielle en coupe transversale d'une machine selon un premier mode de réalisation.

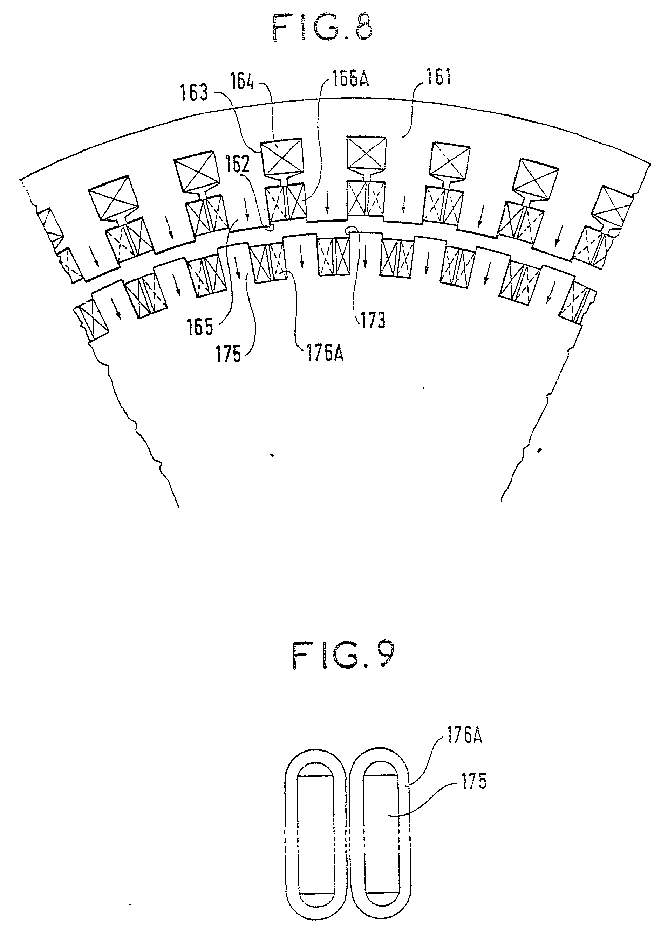

La figure 8 est une vue partielle en coupe transversale d'une machine selon un second mode de réalisation.

La figure 9 est un détail de la figure 8.

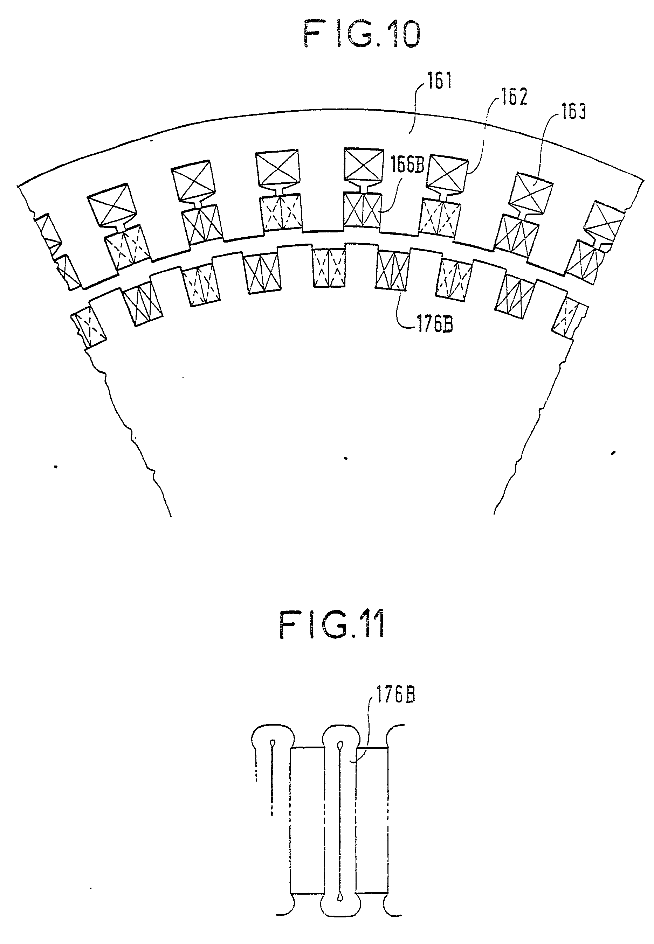

La figure 10 est une vue partielle en coupe transversale d'une machine selon un troisième mode de réalisation.

La figure 11 est un détail de la figure 10.

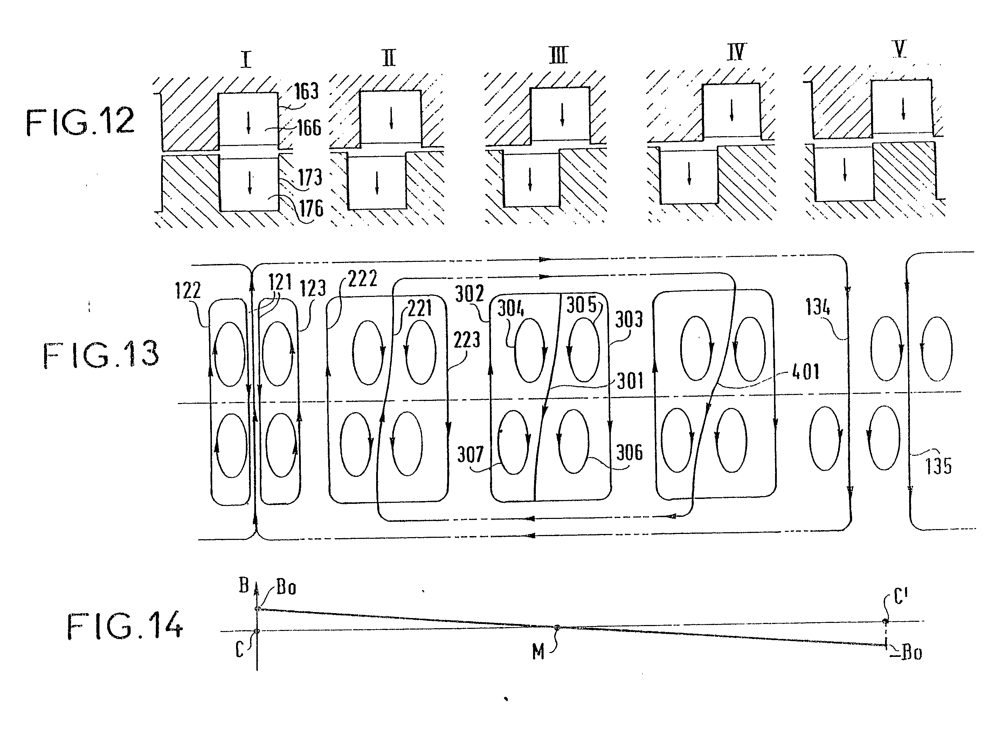

Les figures 12, 13 et 14 sont des schémas expliquant le fonctionnement de la machine.

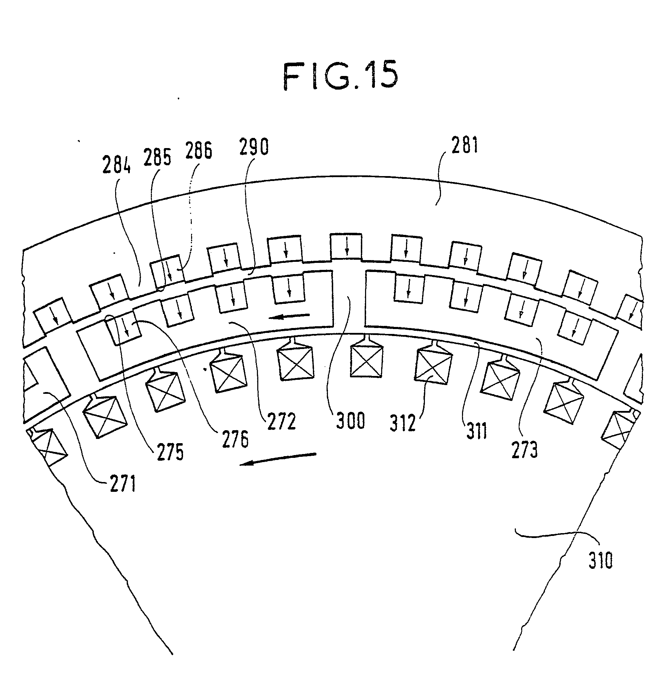

La figure 15 est une vue partielle en coupe transversale d'un réducteur selon un mode préféré de réalisation de l'invention.

Les figures 7 à 11 concernent des machines selon l'invention.

Bien que les exemples donnés soient relatifs à des machines rotatives, il est clair que l'invention s'applique également à des machines linéaires, l'homme du métier n'ayant aucun mal à effectuer les modifications nécessaires.

La figure 7 représente une machine électrique vernier selon l'invention. Elle comprend un stator 161 formé d'un assemblage de tôles magnétiques découpées de manière à constituer des encoches telles que 162 et 163. Les encoches 162, au nombre de $N = np$, sont munies d'un bobinage 164 polyphasé, créant un champ alternatif à 2 p pôles.

Les encoches 163, qui définissent des dents 165, sont munies d'aimants permanents tels que 166, agencés de manière à créer une induction radiale, dans un sens quelconque, ici dirigée vers le centre du moteur (flèche).

La machine comprend un stator 171, également formé de tôles magnétiques, découpées de manière à définir des encoches 173 et des dents 175 en nombre $M = mp$, avec m différent de n, par exemple $m = n + 1$.

Les encoches 173 sont garnies d'aimants permanents 176 agencés de manière à créer une induction radiale dirigée dans le même sens que celui des inductions créées par les aimants statoriques. Le stator et le rotor sont séparés par un entrefer 180.

Les aimants permanents sont destinés à créer des flux d'excitation radiaux.

Dans les figures 8 et 9, ces flux sont créés par des bobinages 166A (stator) et 176A (rotor) entourant les dents, et parcourus par des courants continus.

Dans les figures 10 et 11, ces flux sont créés par des bobinages tels que 166B (stator) et 176B (rotor) placés à l'intérieur de chacune des dents.

On notera que dans les trois exemples des figures 7 à 11, les encoches 162 et les bobinages 164, destinés à créer le champ tournant peuvent être supprimés, ce champ étant créé par des bobinages placés dans un certain nombre d'encoches 163 à la place des aimants correspondants.

Les machines des figures 7 à 11 fonctionnent aussi bien en moteur qu'en génératrice.

Dans le premier cas, on alimente les bobinages 164 en courant polyphasé et on recueille un couple mécanique au rotor.

Dans le second cas, on entraîne le rotor et on recueille un courant polyphasé au stator.

Les figures 12 à 14 illustrent le fonctionnement de la machine.

La figure 12 montre les encoches 163 et 173 du stator et du rotor, dans diverses configurations qui existent à tout instant en divers points du rotor et du stator.

A gauche de la figure, les encoches du stator et du rotor sont en vis-à-vis (position I).

A droite de la figure, les encoches sont décalées de la largeur d'une dent (position V).

Au centre, les encoches sont décalées d'une demi-dent (position III).

Entre les positions extrêmes et la position centrale, on trouve deux positions intermédiaires (II et IV).

La figure 13 montre schématiquement le trajet des lignes de forces émises par les aimants.

En position III les flux des aimants se referment pratiquement sur place. On voit le flux principal 301 se refermer par les boucles 302 et 303 qui ne s'éloignent pas plus de la distance d'une demi-dent. Les références 304 à 307 désignent les petites boucles de champ dues à l'entrefer.

En position I, le flux 121 se referme sur place en 122 et 123. En position V le flux 134 se ferme en position I, et le flux 135 se ferme symétriquement où il trouve la plus faible réluctance.

En position II intermédiaire le flux 221 se ferme sur place en 222 et 223 et en position IV une part du flux 401 se referme en position II.

Globalement, l'induction dans l'entrefer varie en fonction de l'espace, entre deux configurations de dents en vis-à-vis et en opposition, entre deux valeurs Bo et — Bo comme illustré dans la figure 11.

L'effet vernier existe bien. Si le stator à np dents et le rotor $(n + 1) p$ et si le champ statorique tourne à une vitesse V, le rotor tourne à une vitesse $V/n + 1$.

Par rapport aux machines connues et décrites au début du présent mémoire, les machines de l'invention permettent d'atteindre les objectifs définis plus haut (meilleur rapport couple/poids).

Par ailleurs, elles fournissent, toutes choses égales par ailleurs, un meilleur facteur de puissance (cos φ).

Les machines de l'invention qui viennent d'être décrites montrent des dentures régulières au stator et au rotor, avec respectivement deux valeurs de pas.

En variante, la machine peut être réalisée selon l'invention, en associant à une denture régulière, une denture discontinue composée de P groupes de Q dents ayant des pas égaux aux précédents, les groupes étant convenablement décalés dans l'espace comme indiqué dans l'art antérieur en référence à la figure 3, pour obtenir l'effet vernier.

La machine décrite précédemment peut être modifiée simplement pour fonctionner en réducteur de couple.

La figure 15 en montre un exemple.

Le rotor 271, comporte une pluralité de groupes de dents (on a représenté deux groupes 272 et 273 de cinq dents 274 et quatre encoches 275 chacun) séparés par des entrefers tels que 300, très supérieur aux autres entrefers décrits plus loin. On n'a pas représenté les liaisons mécaniques des différents groupes entre eux qui sont constituées de pièces amagnétiques. L'entrefer 300 est un peu supérieur à un multiple d'un pas de manière à créer l'effet vernier.

Le stator 281 comporte des dents 284 et des encoches 285, au même pas que les dents des groupes du rotor 271. Le stator et le rotor sont séparés par un entrefer très mince 290.

Les encoches 275 du rotor et 285 du stator sont munies de générateurs de flux orientés radialement et dans le même sens, comme l'indique les flèches. Ici, on a représenté des aimants 276 au rotor et 286 au stator.

Un second rotor, 310, séparé du rotor 271 par un entrefer 311 très mince, porte des bobines 312 pour créer un champ multipolaire.

Le nombre et la disposition des bobines est choisi pour que le champ multipolaire ait même nombre de pôles que celui créé par les aimants du stator.

Ce réducteur a un fonctionnement analogue à celui des réducteurs de type connu, mais il possède tous les avantages de l'invention qui ont été cités à propos des moteurs et génératrices.

**Revendications**

1. Machine électrodynamique vernier, du type comportant :

— deux pièces séparées l'une de l'autre par un entrefer (180) disposé suivant une surface, ces pièces pouvant se déplacer l'une par rapport à l'autre suivant une direction de cette surface de manière que l'épaisseur de l'entrefer reste constante

• une première de ces pièces (161) étant constituée par une armature magnétique comportant N dents formant N encoches, les encoches débouchant dans l'entrefer et étant uniformément réparties le long de ladite direction.

• la seconde pièce comprenant, disposés le long de ladite direction, soit M dents formant M encoches avec un pas différent du pas des dents de la première pièce soit P groupes de Q dents au même pas que celui des dents de la première pièce, les groupes étant décalés pour obtenir l'effet vernier,

et des moyens pour créer dans l'entrefer un champ magnétique glissant par rapport à la première pièce le long de ladite direction, caractérisée en ce que chacune des dents (165, 175) de la première (161) et de la seconde pièce (171) comporte des générateurs d'induction magnétique (166, 176) créant des flux d'induction normaux à l'entrefer et orientés dans le même sens.

2. Machine électrodynamique vernier selon la revendication 1, caractérisée en ce que les générateurs d'induction magnétique sont des aimants (166) disposés dans les encoches.

3. Machine électrodynamique vernier selon la revendication 1, caractérisée en ce que les générateurs de flux sont des bobines (166A) entourant les dents et parcourues par un courant continu.

4. Machine électrodynamique vernier selon la revendication 1, caractérisée en ce que les générateurs de flux sont des bobines (166B) enserrées dans les encoches et parcourues par un courant continu.

5. Machine électrodynamique selon l'une des revendications 1 à 4, caractérisée en ce que les moyens pour créer un champ glissant comprennent un bobinage polyphasé (164) placé de manière solidaire à l'armature.

6. Machine selon l'une des revendications 1 à 4, caractérisée en ce que les moyens pour créer un champ magnétique glissant comprennent des bobinages (312) alimentés en courant continu et placés sur une troisième pièce (310), mobile, séparée de la première pièce par un second entrefer (311).

7. Machine selon l'une des revendications 1 à 6, caractérisée en ce que la machine est tournante.

**Claims**

1. A vernier-type electrodynamic machine of the kind comprising :

— two parts separated from one another by an air gap (180), arranged along a surface, said parts being adapted to move relativ to one another in one direction of the surface, such, that the width of the air gap is kept constant,

• the first of the parts (161) consisting of a magnetic armature with N teeth forming N slots opening onto the air gap and evenly spaced along said direction,

• the second part comprising M teeth arranged along said direction, forming M slots with a different pitch from that of the teeth of the first part, respectively P groups of Q teeth having the same pitch as that of the teeth of the first part, the groups being staggered to yield the vernier effect,

• and means for generating in the air gap a magnetic field sliding relative to the first part along said direction, characterized in that each of the teeth (165, 175) of the first (161) and second (171) parts comprises magnetic induction generators (166, 176) creating induction fluxes normal to the air gap and oriented in the same direction.

2. A vernier-type electrodynamic machine according to Claim 1, characterized in that the magnetic induction generators are magnets (166) arranged in the solts.

3. A vernier-type electrodynamic machine according to Claim 1, characterized in that the flux generators are coils (166A) surrounding the teeth and carrying direct current.

4. A vernier-type electrodynamic machine according to Claim 1, characterized in that the flux generators are coils (166B) fitted within the slots and carrying direct current.

5. A vernier-type electrodynamic machine according to Claims 1 to 4, characterized in that the means for creating a sliding field include a polyphase winding (164) secured to the armature.

6. A vernier-type machine according to Claims 1 to 4, characterized in that the means for creating a sliding field comprise windings (312) supplied with DC current and being located on a third moving part (310) separated from said first part by a second air gap (311).

7. A vernier-type machine according to Claims 1 to 6, characterized in that the machine is of the rotating type.

**Patentansprüche**

1. Elektrodynamische Verniermaschine mit :

— zwei Bauteilen, die durch einen entlang einer Oberfläche laufenden Luftspalt voneinander getrennt sind und sich gegeneinander in einer Richtung dieser Oberfläche verschieben können, derart, daß die Luftspaltbreite konstant bleibt ;

• wobei ein erstes dieser Bauteile (161) aus einem magnetischen Anker mit N Zähnen und N Nuten besteht, wobei die Nuten in den Luftspalt münden und gleichmäßig entlang der genannten Richtung verteilt sind ;

• wobei ein zweites Bauteil, über die genannte Richtung verteilt, entweder M Zähne mit N Nuten aufweist, die eine von der Zahnteilung des ersten Bauteiles verschiedene Teilung besitzen, oder P Gruppen mit Q Zähnen aufweist, die die gleiche Teilung wie die der Zähne des ersten Bauteiles besitzen, wobei die Gruppen, zur Erzielung des Verniereffektes versetzt sind ;
und mit Mitteln zur Erzeugung eines im Luftspalt relativ zum ersten Bauteil in der genannten Richtung gleitenden Magnetfeldes,
dadurch gekennzeichnet, daß jeder der Zähne (165, 175) des ersten (161) und des zweiten (171) Bauteiles magnetische Induktionsgeneratoren (166, 167) aufweist, die in der Normalen des Luftspaltes gleichsinnig orientierte magnetische Flüsse erzeugen.

2. Elektrodynamische Verniermaschine nach Anspruch 1, dadurch gekennzeichnet, daß die magnetischen Induktionsgeneratoren Magnete (166) sind, die in den Nuten angeordnet sind.

3. Elektrodynamische Verniermaschine nach Anspruch 1, dadurch gekennzeichnet, daß die magnetischen Induktionsgeneratoren Spulen (166A) sind, welche die Zähne umschließen und Gleichstrom führen.

4. Elektrodynamische Verniermaschine nach Anspruch 1, dadurch gekennzeichnet, daß die magnetischen Induktionsgeneratoren Spulen (166B) sind, die in die Nuten eingesetzt sind und Gleichstrom führen.

5. Elektrodynamische Verniermaschine nach den Ansprüchen 1 bis 4, dadurch gekennzeichnet, daß die Mittel zur Erzeugung eines gleitenden Feldes eine mehrphasige Wicklung (164) umfassen, die fest mit dem Anker verbunden ist.

6. Elektrodynamische Verniermaschine nach den Ansprüchen 1 bis 4, dadurch gekennzeichnet, daß die Mittel zur Erzeugung eines gleitenden Feldes Wicklungen (312) umfassen, die mit Gleichstrom gespeist werden und auf einem dritten beweglichen Bauteil (310) angebracht sind, das vom ersten Bauteil durch einen zweiten Luftspalt (311) getrennt ist.

7. Maschine nach einem der Ansprüche 1 bis 6, dadurch gekennzeichnet, daß es sich um eine rotierende Maschine handelt.

# FIG.1

# FIG.2

# FIG.3

# FIG.4

# FIG.5

# FIG.6

# FIG.7

4

# FIG.8

# FIG.9

# FIG.10

161
162
163
166B
176B

# FIG.11

176B

FIG.12

I    II    III    IV    V

163
166
173
176

FIG.13

122  121 123  222  302  304  305  303  134
          221      301
          223
307  306  401  135

FIG.14

B  Bo
C'
C   M   Bo

0 158 935

# FIG.15